Europäisches Patentamt

European Patent Office

Office européen des brevets

(11) Publication number: **0 173 774**
**B1**

# EUROPEAN PATENT SPECIFICATION

(45) Date of publication of patent specification: **26.07.89**

(51) Int. Cl.⁴: **F 02 C 7/08, F 02 C 3/073**

(21) Application number: **84305313.3**

(22) Date of filing: **06.08.84**

(54) Gas turbine engine.

(43) Date of publication of application:
**12.03.86 Bulletin 86/11**

(45) Publication of the grant of the patent:
**26.07.89 Bulletin 89/30**

(84) Designated Contracting States:
**AT BE CH DE FR GB IT LI LU NL SE**

(56) References cited:
**FR-A-2 102 467**
**FR-A-2 141 435**
**GB-A- 586 216**
**GB-A- 592 615**
**GB-A- 705 611**
**US-A-3 302 397**

(73) Proprietor: **Shapiro, Jacov**
**Ez'l Street 16/17 French Hill**
**Jerusalem (IL)**

(72) Inventor: **Shapiro, Jacov**
**Ez'l Street 16/17**
**French Hill Jerusalem (IL)**
Inventor: **Levy, Abraham**
**13 Kaplinsky Street**
**Rishon Le Zion 75241 (IL)**
Inventor: **Maayan, Jacob**
**6 Frischman Street**
**Rishon Le Zion 75279 (IL)**

(74) Representative: **Corin, Christopher John et al**
**Mathisen Macara & Co. The Coach House 6-8**
**Swakeleys Road**
**Ickenham Uxbridge UB10 8BZ (GB)**

## Description

The present invention relates to gas turbine engines and more particularly to compact high-efficiency medium output gas turbine engines using heat exchangers.

Gas turbine engines conventionally comprise a compressor for pressurizing inlet air to support combustion of fuel in the generation of a hot gas stream. The energy in this hot gas stream is used to drive the compressor via turbine means and to obtain propulsive power or to generate shaft output power from said turbine means, or from an additional power-turbine means.

Efforts to obtain higher operating efficiencies and/or power outputs have concentrated on increasing the gas stream temperature and/or on the utilisation of a heat exchanger, situated downstream of the power turbine, in order to transfer waste-heat energy remaining in the exhaust gases to preheat the compressed air before combustion.

The gas-stream temperature is limited by the physical capabilities of the materials used for the turbine blades. This is especially true when one considers the high stresses imposed on the turbine rotor. This limitation has led to many proposed cooling systems for the turbine, one such proposal being that part of the relatively cool air derived from the compressor be directed to the turbine to provide a cooling effect for lowering the temperature of the turbine blades to a level at which the material has sufficient strength to withstand the imposed stresses. The effectiveness of this solution is limited by the relatively large amount of work which must be done on the cooling air in order to deliver it to the turbine rotor. Moreover, the air used for cooling in the past did not go to the combustion chamber and, therefore, did not take part in the power-generating process, its energy thus being largely lost.

Conventional use of heat exchangers for utilisation of exhaust-gas heat requires the transport of the compressed air or of the exhaust gases from one end of the gas turbine engine to the other end and back again. This movement of air or gas necessitates an increased diameter of the gas turbine engine and additional ductwork for air or gas transport. Moreover, as the compression ratio of the engine increases, the temperature of the compressed air rises and the exhaust-gas temperature diminishes, limiting or impairing the effectiveness of heat exchange. In addition, since the specific volume of the gas at the exhaust of the gas turbine engine is relatively high, very large heat exchangers are required to avoid excessive pressure drops.

In applications where compactness is important, the above limitations have therefore restricted the use of gas turbine engines with conventional heat exchangers to outputs not higher than 600 HP.

GB—A—604114 (Smith) mentions a regengerative gas turbine plant having a heat exchanger located between the power turbine 8 and the compressor turbine 3. However, perusal of the Smith disclosure clearly shows that none of the compressed air produced by the compressor 1 and introduced into the air ducting 5 is used to cool the blading of the compressor turbine 3, the design of the air ducting 5 in fact precluding such use. As, however, the turbine blades do have to be cooled, it is clear, even if not shown in the drawings, that the compressor 1 must provide a further, separate, quantity of air to be exclusively used for cooling purposes. This air does not reach the combustion chamber and, not taking part in the power-generating part, its energy is almost completely lost, as already mentioned by way of a general remark. In the present invention, as will be shown presently, the entire quantity of compressed air produced by the compressor is used to cool the compressor-turbine blading, and all of it subsequently reaches the combustion chamber.

GB—A—592615 describes a gas turbine power plant comprising compressor means for compressing inlet air, said compressor means comprising at least two stages, including at least one stage which is constituted by an axial-compressor portion of an integral axial compressor/axial compressor-turbine unit including a turbine disc carrying a row of blades in the form of two concentric arrays of blades, the inner array of which constitutes said axial compressor portion and the outer array of which constitutes an axial compressor-turbine portion of said integral axial compressor/axial compressor-turbine unit, combustion means for burning fuel in mixture with the compressed air produced by said compressor means to provide hot gases, output-power generating means located downstream of said combustion means and operated responsive to said hot gases, first means for directing said hot gases from said combustion means to said compressor-turbine portion of said integral axial compressor/axial compressor-turbine unit for driving the same and driving therewith the preceding stage or stages of said compressor means, second means for directing the compressed air which is produced by said preceding stage or stages of said compressor means to said final stage thereof prior to mixing of that compressed air with fuel, for thereby cooling said row of blades of said integral axial compressor/axial compressor-turbine unit, both said first and said second directing means along constructed and arranged for respectively guiding said hot gases and said compressed air to flow, within the interior of said engine and in the same direction, through said integral axial compressor/axial compressor-turbine unit, and a heat exchange means arranged and adapted to transfer heat from said hot gases to said compressed air after said hot gases have passed said axial compressor-turbine portion and before said compressed air enters said combustion means.

It is an object of the present invention to provide a highly efficient medium output gas turbine engine of this type which is much more compact.

To this end, according to the invention, a compact, medium output gas turbine engine of the constructoin defined above in relation to GB—A—592615 is characterised in that the compressor stages include one centrifugal-type compressor stage and said compressor stages are all mounted on a common shaft with the final stage thereof being constructed by the axial-compressor portion of said integral axial compressor/axial compressor-turbine unit, and in that said output-power generating means comprisas a power turbine for the generation of shaft power and said heat exchange means is intercalated between said integral axial compressor/axial compressor-turbine unit and said power turbine.

Ducting and tubing are minimized, in fact no external ducting and tubing are required and hence the overall size of the gas turbine engine is reduced by placing the heat exchanger immediately after the compressor-turbine and the final compressor stage. In addition, several other synergistic advantages are immediately secured.

The gas exiting from the axial compressor-turbine portion of the integral axial compressor/axial compressor-turbine unit is substantially hotter than the air exiting from the axial compressor portion. Thus, even at compression ratios of 12 to 15 which are optimal for this cycle, and at the correspondingly high compressed-air temperatures, the heat exchanger location in accordance with the present invention provides for efficient heat exchange.

Additionally, the specific volume of the hot gases at the compressor-turbine outlet is considerably lower than that at the exhaust of the gas turbine engine, so that location of the heat exchanger in accordance with the present invention results in a substantially smaller heat exchanger than in conventional gas turbine engines. Moreover, the gas pressure at the exit of the axial compressor-turbine portion of the integral unit is high compared to that at the gas turbine engine exhaust. Therefore, larger pressure drops can be tolerated in the heat exchanger of engines in accordance with the invention than in those of conventional gas turbine engines without essential lowering the power-turbine output which is dependent on the ratio of the pressure drop to the absolute pressure.

By placing the heat exchanger upstream of the power-turbine the heat energy is abstracted from the gas before the power-turbine and is recycled, lowering the power output for a given air flow. This facilitates increasing the air flow at the working conditions of minimum power output and allows blade height to be increased, improving compressor and turbine efficiency for medium-powered gas turbine engines.

The power-turbine inlet gas temperature being thus relatively low, variable-geometry nozzles can be used in the power turbine for improving gasturbine efficiency at partial loads and speed changes. The exhaust gas temperature is also much lower than with conventional arrangements.

Using air or gas by-pass of the heat exchanger, it is possible to obtain short-period power-output increases by increasing power-turbine inlet gas temperature without changing compressor-turbine speed and air flow. Since this process is not affected by compressor-turbine rotor inertia, power increases obtained in this way are almost instantaneous.

It should be noted that, although this concept of heat exchanger location will favorably affect the performance of any medium output gas turbine engine, its full advantage is best brought out in conjunction with the aforesaid feature of the present invention, according to which the axial compressor stage is combined with the axial compressor-turbine stage into an integral axial compressor/axial compressor-turbine unit, mounted on a single disc. In this design the relatively cold air stream prevents the heat from the hot turbine gases from spreading into the disc. The relatively cold disc is thus not subjected to the large thermal stresses which are usual at high inlet gas temperatures, which permits higher speed and greater power output from the turbine stage. In addition, a low and stable turbine disc temperature permits turbine-blade tip clearance to be substantially reduced, which makes for smaller losses. Cooling conduits may be provided within the axial compressor-turbine blades for the passage of portion of the compressed air through the turbine blades. Means are provided for keeping the hot gases and compressed air substantially separate. The separated streams of air and gas flow through the integral axial compressor/axial compressor-turbine unit in the same direction, entering the heat exchanger without additional ducting arrangements.

The combination of the integral axial compressor/axial compressor-turbine unit with the intermediate heat-exchanger location of the present invention further reduces the ductwork needed due to the interior air flow thus facilitated.

It should also be noted that substantial precompression as facilitated by the front centrifugal compressor stage upstream of the integral axial compressor/axial compressor-turbine unit reduces the gas-air pressure differences, thereby simplifying sealing problems.

It is advantageous to use a partial-admission axial turbine in the integral axial compressor/axial compressor-turbine unit for the added cooling effect afforded by the so reduced circumference impacted by the hot gases at each revolution of the turbine blade array. The term "partial-admission turbine", it should be noted, refers to a design, as such known, in which only part of the turbine blades are subjected to the impact of the working medium. This permits the use of the more efficient longer blades also for relatively small medium flow rates. In practice, this is achieved by screening off a certain angular segment of the stator blading. As a consequence, that turbine-blading segment which, at any time, is downstream of this screen, is not impacted. Thus at a partial-admission factor of, e.g., $\varepsilon=0.75$, only

3/4 of all turbine blades are impacted at any given time, the screen having an angular extent of 90°. This design has also a favorable effect on cooling, as, taking the above example, 25% of all blades are at any given instant protected from the hot medium.

In the case of gas turbine engines having small power outputs with correspondingly small air flows, it is expedient to use partial admission not only in the axial compressor-turbine portion but also in the axial compressor portion of the integral axial compressor/axial compressor-turbine unit. This allows the height of the blades to be increased, improving the efficiencies of the compressor and turbine, which may compensate for the partial admission losses.

The present invention can be utilized in various gas turbine engine types involving an output-power turbine, such as turboshaft and turboprop engines. The many uses include mechanical shaft power generation and aircraft propulsion, including helicopter propulsion.

While the invention will now be described in connected with certain preferred embodiments with reference to the following illustrative figures so that it may be more fully understood, it is, however, stressed that the particulars shown and described are by way of example and for the purposes of illustrative discussion only and are presented in the cause of providing what is believed to be principles and conceptual aspects of the invention. In this regard, no attempt is made to show structural details of the devices and their elements in more detail than is necessary for a fundamental understanding of the invention, the description taken with the drawings making apparent to those skilled in the art how the several forms of the invention may be embodied in practice.

In the drawings:

Fig. 1 is a diagrammatic layout of the gas turbine engine according to the present invention;

Fig. 2 is a schematic representation of a preferred embodiment of the present invention;

Fig. 3 is a perspective view, partially sectioned, of a double-decked blade of the integral axial compressor/axial compressor-turbine unit;

Fig. 4 is a perspective view of a cylindrical, spiral-duct counterflow heat exchanger;

Fig. 5 is a detail of the heat exchanger of Fig. 4;

Fig. 6 is another detail of the heat exchanger of Fig. 4;

Fig. 7 is a T—S (temperature-entropy) diagram of the gas turbine engine of the present invention;

Fig. 8 shows specific power and specific fuel consumption W and $C_e$ for a gas turbine engine of the present invention as a function of compression ratio $\varepsilon_c$ and for a range of heat exchanger efficiencies $\eta_R$;

Fig. 9 is a schematic representation of a low-power gas turbine of the present invention; and

Fig. 10 schematically illustrates the principle of the partial-admission turbine.

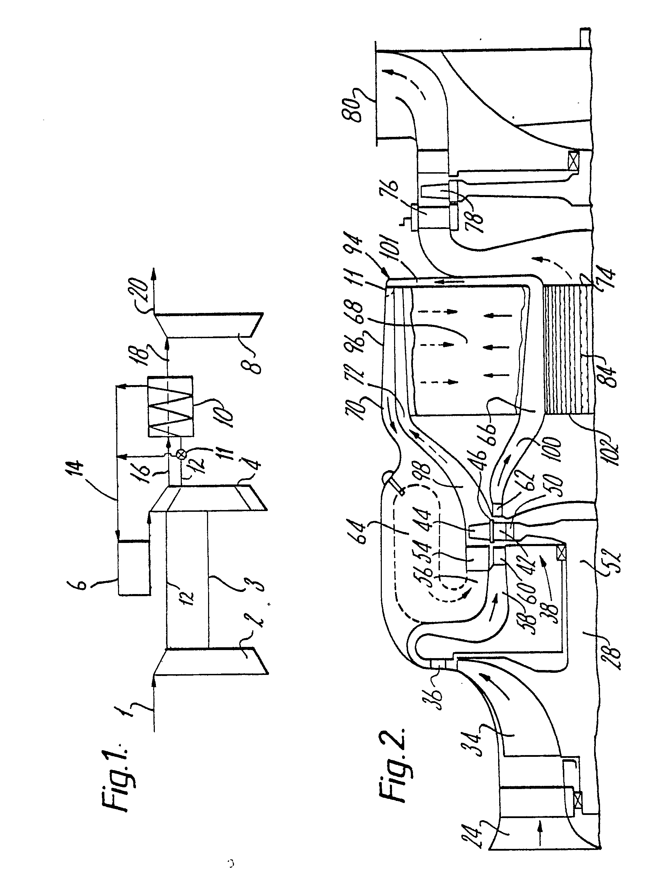

There is shown in Fig. 1 a diagrammatic layout of a gas turbine engine according to the invention. Seen is a compressor 2 mechanically connected by a shaft 3 to a compressor-turbine 4, a combustion chamber 6, a power turbine 8 and at least functionally, but preferably also physically, interposed between the latter and the compressor-turbine 4, a heat exchanger 10. Inlet air 1 is drawn by compressor 2 from the outside and forced into heat exchanger 10 where it is heated and, as hot air 14, is led into combustion chamber 6. Here it sustains the combustion of the fuel, leaving the combustion chamber 6 as hot gas 16 which drives the compressor-turbine 4 and is led into the heat exchanger 10, where part of its heat is transferred to the compressed air 12. It leaves the heat exchanger 10 at a much lower temperature as cold gas 18, to impinge on, and drive, power turbine 8, which it exits as exhaust gas 20.

When short-time peak power outputs are required, an air-shunt arrangement 11 is used, which permits all or part of the air flow to bypass the heat exchanger on its way to the combustion chamber 6, thereby increasing the temperature of the gases reaching the power turbine 8. This results in an immediate increase in power output.

The advantages of the turbine according to the invention, in which the heat exchanger is intercalated between the compressor-turbine and the power-turbine are, however, still enhanced in a preferred embodiment of the present invention (Fig. 2) in which, as already mentioned, an axial compressor stage is combined with the compressor-turbine to form an integral axial compressor/axial compressor-turbine unit.

There is seen in Fig. 2 a gas turbine engine comprising air inlet 24, a compressor stage employing a centrifugal compressor 34 followed by radial diffuser 36 is mounted on the compressor shaft 28.

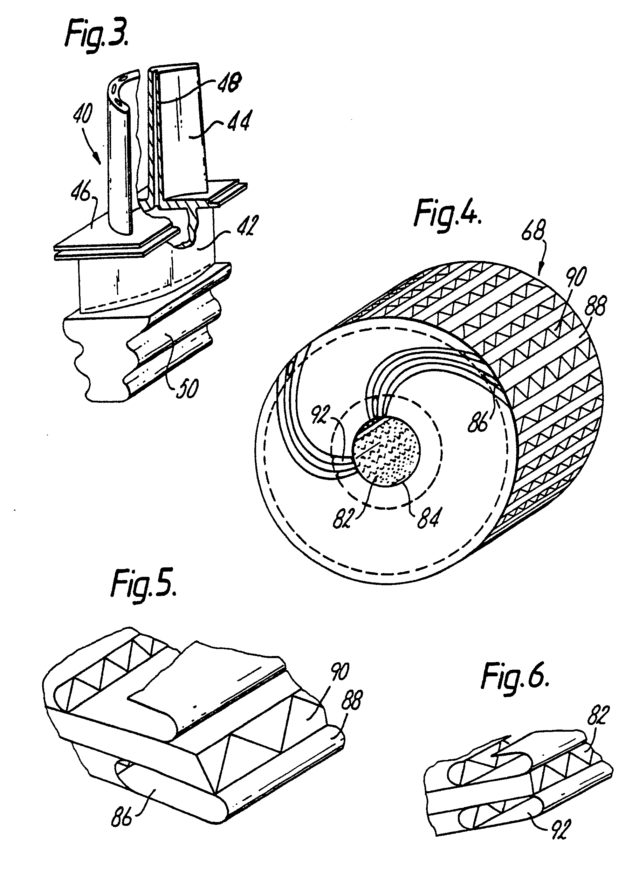

An integral axial compressor/axial compressor-turbine unit 38 comprises a row of double-decked blades 40 (see Fig. 3) each comprising a compressor blade 42 and above it a turbine blade 44 in radial juxtaposition and separated by a shelf portion 46. Interior cooling conduits 48 are formed within the turbine blade 44 and extend through said shelf portion 46. The double-decked blades 40 are further provided with mounting means 50 for mounting them on the disc 52 which is fixed to compressor shaft 28. The disc 52 of this integral unit is thus provided with two concentric sets or arrays of blades 42 and 44, respectively, each of which arrays may, but need not necessarily, consist of an equal number of blades. It is also possible to prepare the disc 52 and the arrays of blades 42 and 44 as one integral whole, e.g. by casting.

The set of turbine blades 44 together with turbine nozzles 54 are thus seen to comprise a compressor-turbine portion 56, while the compressor blades 42 together with inlet guide vanes 60 and outlet stator 62 comprise a compressor portion 58. The inlet to the compressor portion 58 communicates with the outlet of the centrifugal compressor 34, while the inlet of the compressor-turbine portion 56 communicates with the outlet of combustion chamber 64.

The outlet of the compressor portion 58 is joined to compressed-air inlet 66 of the heat exchanger 68 whose pre-heated compressed-air outlet 70 leads to combustion chamber 64.

The outlet of the compressor portion 58 is joined to compressed-air inlet 66 of heat exchanger 68 whose pre-heated compress-air outlet 70 leads to combustion chamber 64. Hot-gas inlet 72 and cooled-gas outlet 74 of the heat exchanger 68 communicate respectively with the outlet of compressor-turbine portion 56 and with variable-geometry turbine nozzles 76 of the power turbine 78. The outlet 80 of the power turbine 78 constitutes the exhaust of the gas turbine engine.

The adjustable air-shunt arrangement 11 permits the air to bypass the heat exchanger 68 and to enter directly into the combustion chamber 64 through passage 101 and outlet 70.

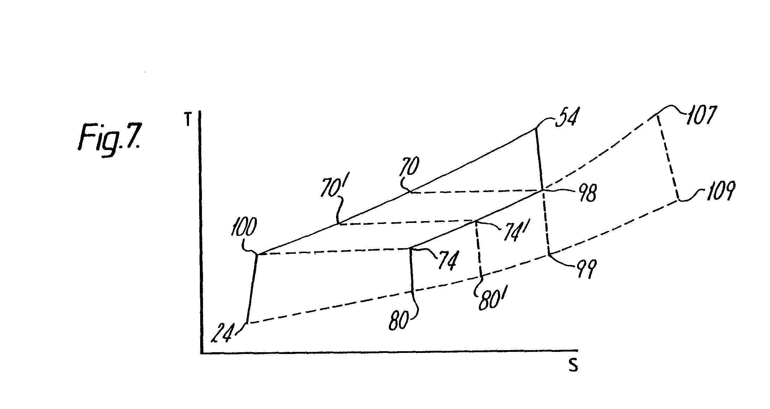

The operation of this gas turbine engine can be better understood with the aid of the T—S diagram of Fig. 7, wherein the reference numbers on the diagram refer to corresponding items in Fig. 2. This preferred embodiment operates on a modified Brayton cycle differing from the conventional Brayton cycle in that part of the energy normally supplied to the compressed air by fuel combustion is supplied by heat transfer from the hot gases after these hot gases have driven the compressor-turbine. This heat is supplied from hot gases prior to driving the power turbine rather than from the exhaust gases of the power turbine.

It should be noted that both air and gas operate on the same thermodynamic cycle.

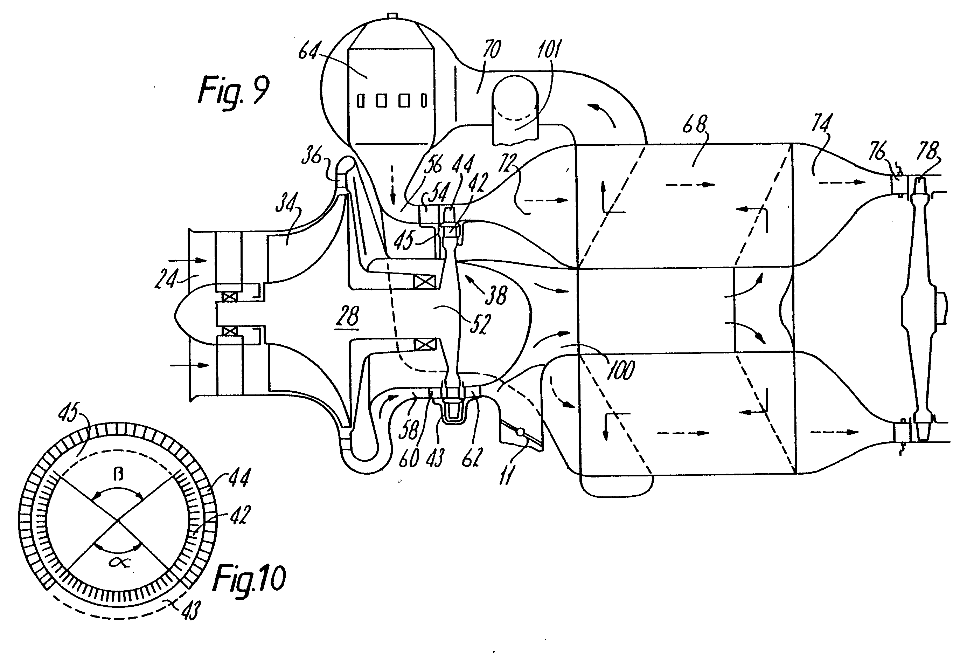

When full bypass is used, the power-turbine inlet gas temperature will be raised to the maximum, prevailing in the duct 98 and, consequently, power will be increased. The line 98—99 in Fig. 7 is seen to be longer than the line 74—80. Lines 70'—74'—80' represent the situation when about half the compressed air is permitted to bypass the heat exchanger 68. Line 98—107 indicates additional gas heating in the after-burner 114 of the turbojet engine of Fig. 9 (to be explained further below) and line 107—109 represents expansion in the nozzle 112.

In operation, air (indicated by solid arrows) enters the gas turbine engine at air inlet 24, is compressed by compressor 34 and the axial compressor portion 58 of the integral axial compressor/axial compressor-turbine unit 38. The compressed air enters the heat exchanger 68 directly at compressed-air inlet 66, wherein heat energy is transferred to the compressed air from hot gases as described below. The preheated compressed air exits the heat exchanger 68 at heated-air outlet 70 and enters combustion chamber 64. A combustion process at substantially constant pressure in combustion chamber 64 adds energy to the air, which exits the combustion chamber 64 together with the combustion products as a hot gas stream (indicated by dashed arrows). The hot gases enter the axial turbine portion 56 of the integral unit 38 via turbine nozzles 54. This hot gas stream impacts blades 44 to drive the compressor shaft 28 and, consequently, compressor 34, as well as the axial compressor set of blades 42 of the integral unit 38.

The hot gases entering the axial turbine portion 56 are very hot, the temperature limit being set by the materials used in the blades. However, this temperature limit can be raised by the construction shown in Fig. 3, wherein the compressed air cools the blades 42 by convection and, subsequently, the blades 44 by conduction. Also, a small portion of the air that is compressed by compressor blades 42 is forced through conduits 48 in the turbine blades 44, to further cool blades 44 by convection.

The compressed air in a particular embodiment is approximately 600°C cooler than the hot gas flowing through the compressor-turbine portion and, therefore, this flow of air cools the turbine blades 44 and keeps the turbine disc 52 cool as well. The cooling air which exits the conduits at the end of the turbine blades 44 joins the hot gas stream.

While the hot gas temperature is reduced during its passage through the compressor-turbine portion 56 due to expansion, it is, nevertheless, still relatively high. For example, the temperature may be reduced from a compressor-turbine inlet gas temperature of approximately 1100°C to approximately 750°C. The hot gas at this temperature and at a pressure of, for example, approximately 3 bar directly enters the heat exchanger via hot gas inlet 72, wherein heat energy is transferred to the compressed air as indicated above. This heat exchange takes place nearly at a constant pressure and in the counterflow mode.

The construction of the integral unit 38 shown in Fig. 2 is particularly advantageous, because it allows for the flow of hot gas and compressed air in the same direction, facilitating the direct admission of hot gas and compressed air to the heat exchanger 68.

The cooled gas, which leaves the heat exchanger 68 via cooled-gas outlet 74, enters the power turbine 78 via the variable-geometry turbine nozzles 76. These turbines nozzles allow for optimal adjustment of the operating point of the power turbine 78 for varying loads. Due to the lowered gas temperature, the variable-geometry turbine nozzles can be constructed by conventional means. The exhaust gases exit the gas turbine engine at exit 80 at atmospheric pressure and low infra-red temperature. It is a particular feature of the invention that lower exhaust-gas temperatures can be achieved than those of conventional engines.

The cylindrically shaped heat exchanger 68 shown in Fig. 4, which may be made of ceramic, stainless steel or other suitable material or combinations of materials, comprise a plurality of alternating spiral conduits of two types. A first type has first openings 82 along a central bore portion 84 and second openings 86 along a side wall near the outer periphery of the heat exchanger, as shown in detail in Figs. 5 and 6. The outer peripheral walls 88 of these conduits are closed, as are the side walls, except for openings 86. The second conduit type has openings 90 along its outer peripheral wall and second openings 92 along the side wall near the bore 84. The inner peripheral surfaces of these conduits are closed.

It is clearly seen that this heat exchanger meets the requirements previously referred to when, for example, hot gases enter via openings 86 and exit via openings 82, and relatively cooler compressed air enters via openings 92 and exits via openings 90.

The cross-sectional area of the conduits increases with the radius, so that the hot gases which enter via openings 86 and exit at the central bore 84 are reduced in specific volume while they are cooled, thus keeping the velocity of the gas relatively constant. Conversely, the compressed air enters via opening 92 and exits via opening 90, expands as it is heated and flows through the heat exchanger, with the cross-sectional area of the conduits increasing, keeping its velocity relatively constant.

A method of mounting the heat exchanger 68 in the gas turbine engine is seen in Fig. 2. Heat exchanger housing 94 comprises an outer cylindrical shell 96 and annular ducts 98 and 100 together with plate 102 provide means for isolating the openings 82, 86, 90 and 92 from each other, while at the same time providing means for connecting the openings with respective parts of the combustion chamber 64, integral axial compressor/axial compressor-turbine unit 38 and the power turbine 78. As shown in Figs. 2 and 4, the housing 94 connects outlet 90 with the combustion chamber 64 via outlet 70 of the pre-heated compressed-air, outlets 82 with turbine means 78 via cooled-gas outlet 74, while inlets 86 and 92 are connected with the outlets of compressor-turbine portion 56 and compressor portion 58 via inlets 72 and 66, respectively.

It should be noted that since the heat exchanger 68 is placed in a relatively high pressure region of the hot gas stream, a relatively high absolute pressure drop can be tolerated without unacceptable loss of efficiency. This is in constrast with the conventional location of heat exchangers in gas turbines at the exhaust, with a resulting low tolerance for pressure drops.

The heat exchanger location in the present invention is suitable for higher compression-ratio engines, since even for compression ratios of 10 to 15, the temperature differential between the gases exiting the compressor-turbine portion and the compressed air exiting the compressor portion is still high, allowing for substantial and efficient heat exchange.

Keeping these points in mind, it becomes clear that the heat exchanger here presented can be of a considerably smaller size than the conventional heat exchangers.

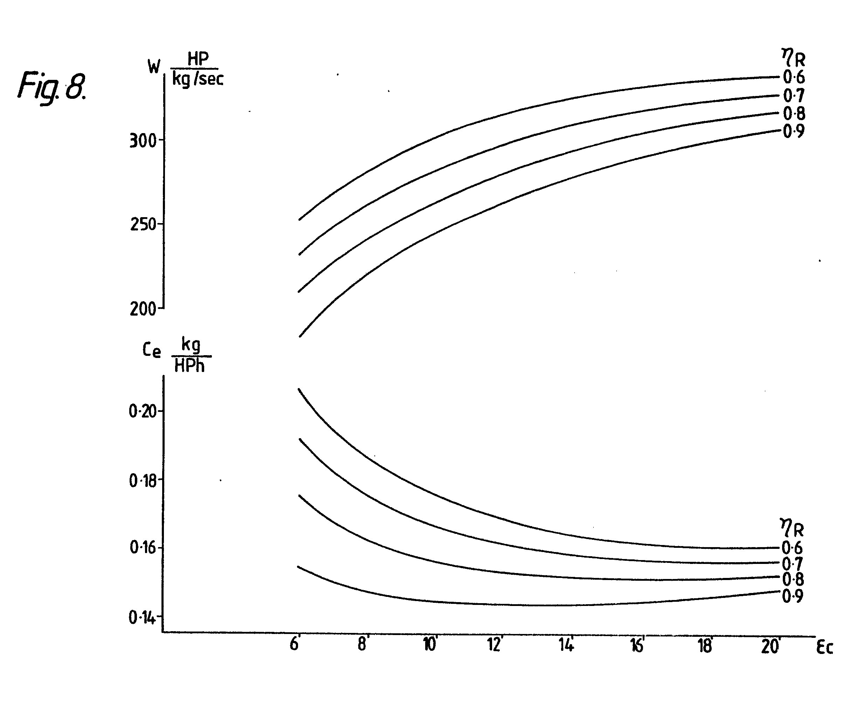

Fig. 8 graphically shows calculated specific fuel consumption $C_e$ and specific power W as a function of compression ratio $\varepsilon_c$, for a range of heat exchanger efficiencies $\eta_R$. The results are calculated at a compressor-turbine inlet gas temperature ($T_{54}$) of 1200°C, compressor efficiency ($\eta_c$) of 0.8, compressor-turbine efficiency ($\eta_T$) of 0.85, power turbine efficiency ($\eta_L$) of 0.9, and relative pressure drop $\Delta P/P$ in the heat exchanger equal to 0.04. Optimum efficiencies are seen to occur for compression ratios of between 12 to 15.

A low-power gas turbine gas engine according to the present invention is shown in Fig. 9 and 10. The integral axial compressor/axial compressor-turbine unit 38 has partial admission for gas and air in the axial compressor-turbine and axial compressor portions arranged in stators 54 and 60. This embodiment in general is identical to the construction of Fig. 2. The angles α and β in Fig. 10 are the angles subtended by the screens 43 and 45 respectively, where there is no admission of gas and air within the working circumferences of the blade arrays.

While particular embodiments of the present invention have been described, it will be evident to those skilled in the art that the present invention may be embodied in other specific forms without departing from the essential characteristics thereof. For instance, the bypass arrangement may be built not only at the air side of the heat exchanger but also at its gas side.

**Claims**

1. A compact, medium-output gas turbine engine, comprising compressor means (2) for compressing inlet air (1), said compressor means comprising at least two stages, including at least one stage which is constituted by an axial-compressor portion of an integral axial compressor/axial compressor-turbine unit (38) including a turbine disc carrying a row of blades (42, 44) in the form of two concentric arrays of blades, the inner array (42) of which constitutes said axial compressor portion and the outer array (44) of which constitutes an axial compressor-turbine portion of said integral axial compressor/axial compressor-turbine unit, combustion means (64) for burning fuel in mixture with the compressed air produced by said compressor means to provide hot gases, output-power generating means (8, 78) located downstream of said combustion means and operated responsive to said hot gases, first means (54) for directing said hot gases from said combustion means (64) to said compressor-turbine portion (44) of said integral axial compressor/axial compressor-turbine unit for driving the same and driving therewith the preceding stage (34) or stages of said compressor means, second means (60) for directing the compressed air which is produced by said preceding stage (34) or stages of said compressor means to said final stage thereof prior to mixing of that compressed air with fuel, for thereby cooling said row of blades (42, 44) of said integral axial compressor/axial compressor-turbine unit, both said first (54) and said second (60) directing means being constructed and arranged for respectively guiding said hot gases and said compressed air to flow, within the interior of said engine and in the same direction, through said integral axial compressor/axial compressor-turbine unit (38), and a heat exchange means (68) arranged and adapted to transfer heat from said hot gases to said compressed air after said hot gases have passed said axial compressor-turbine portion (44) and before said compressed air enters said combustion means (64), characterised in that the compressor stages include one centrifugal-type compressor stage (34) and said compressor stages are all mounted on a common shaft (3, 28) with the final stage thereof being constituted by the axial-compressor portion (42) of said integral axial compressor/axial compressor-turbine unit (38), and in that said output-power generating means (78) comprises a power turbine for generating shaft power and said heat exchange means (68) is intercalated between said integral axial compressor/axial compressor-turbine unit (38) and said power turbine.

2. A gas turbine engine as claimed in claim 1, wherein said integral axial compressor/axial compressor-turbine unit (38) is provided with partial-admission screens (43, 45, Fig. 11) in said axial compressor-turbine portion and/or in said axial compressor portion.

3. A gas turbine engine as claimed in claim 1, wherein said heat exchanger means (68) is a counterflow heat exchanger having a cylindrical shape comprising a plurality of thermally contacting, spirally curved, alternating first and second conduits, wherein each of said first conduits has an opening (82) at one end leading into a central bore portion (84, Fig. 4) of said heat exchanger and another opening (86) near the other end of said first conduit at an outer peripheral edge of a side wall (88) of said heat exchanger, and each of said second conduits has an opening (90) at one end along the outer peripheral surface of said heat exchanger and a second opening (92) at said side wall near said central bore portion.

**Patentansprüche**

1. Kleingasturbine mittlerer Leistung, mit einer Verdichteranordnung (2) zum Verdichten von Ansaugluft (1), bei welcher die Verdichteranordnung wenigstens zwei Stufen aufweist, darunter wenigstens eine Stufe, welche aus einem Axialverdichterteil einer kombinierten Axialverdichter-Axialturbineneinheit (38) gebildet ist, welche eine Beschaufelung in Form zweier konzentrischer Schaufelkränze (42, 44) trägt, von denen der innere Schaufelkranz (42) das Axialverdichterteil und der äußere Schaufelkranz (44) ein Axialverdichterturbinenteil der kombinierten Axialverdichter-Axialverdichterturbineneinheit bildet, mit einer Brenneranordnung (64) zum Verbrennen von Brennstoff im Gemisch mit der von der Verdichteranordnung verdichteten Luft zur Erzeugung von heißen Gasen, mit einer an der Abströmseite der Brenneranordnung angeordneten und von den heißen Gasen beaufschlagten Einrichtung (8, 78) zum Erzeugen einer Abtriebsleistung, einer ersten Leiteinrichtung (54) zum Leiten der heißen Gase von der Brenneranordnung (64) zum Verdichterturbinenteil (44) der kombinierten Axialverdichter-Axialverdichterturbineneinheit für den Antrieb derselben und den damit gemeinsamen Antrieb der ihr vorgeschalteten Stufe (34) oder Stufen der Verdichteranordnung, einer zweiten Leiteinrichtung (60) zum Leiten der von der vorgeschalteten Stufe (34) oder den vorgeschalteten Stufen der Verdichteranordnung verdichteten Luft zur Endstufe derselben vor dem Vermischen der verdichteten Luft mit dem Brennstoff, um damit die Beschaufelung (42, 44) der kombinierten Axialverdichter-Axialverdichterturbineneinheit zu kühlen, wobei die erste (54) und die zweite Leiteinrichtung (60) jeweils so ausgebildet und angeordnet sind, daß sie die heißen Gase bzw. die verdichtete Luft innerhalb der Gasturbine und in der gleichen Richtung durch die kombinierte Axialverdichter-Axialverdichterturbineneinheit (38) hindurchleiten, und mit einer Wärmetauscheranordnung (68) für die Wärmeübertragung von den heißen Gasen auf die verdichtete Luft nach dem Durchtritt der heißen Gase durch das Axialverdichterturbinenteil (44) und vor dem Eintritt der verdichteten Luft in die Brenneranordnung (64), dadurch gekennzeichnet, daß zu den Verdichterstufen eine Radialverdichterstufe (34) gehört und alle Verdichterstufen auf einer gemeinsamen Welle (3, 28) montiert sind, wobei die Endstufe durch das Axialverdichterteil (42) der kombininerten Axialverdichter-Axialverdichterturbineneinheit (38) gebildet ist, und daß die Einrichtung (78) zum Erzeugen der Abtriebsleistung eine Leistungsturbine zum Erzeugen einer Wellenleistung aufweist und die Wärmetauscheranordnung (68) zwischen der kombinierten Axialverdichter-Axialverdichterturbineneinheit (38) und der Leistungsturbine angeordnet ist.

2. Gasturbine nach Anspruch 1 bei welcher die kombinierte Axialverdichter-Axialverdichterturbineneinheit (38) mit Einlaß-Leitgittern (43, 45, Fig. 11) im Axialverdichterturbinenteil und/oder im Axialverdichterteil versehen ist.

3. Gasturbine nach Anspruch 1, bei welcher die Wärmetauscheranordnung (68) ein Gegenstrom-Wärmetauscher von zylindrischer Form ist, welcher eine Vielzahl von in wärmeübertragender Berührung angeordneten, spiralig gekrümmten, einander abwechselnden ersten und zweiten Durchlässen enthält, wobei jeder erste Durchlaß an einem Ende eine in einer Mittelbohrung (84, Fig. 4) des Wärmetauschers ausmündende Öffnung (82) und am anderen Ende eine im äußeren Randbereich einer Seitenwand (88) des Wärmetauschers ausmündende Öffnung (86) aufweist und jeder zweite Durchlaß an einem Ende eine an der äußere Umfangsfläche des Wärmetauschers ausmündende Öffnung (90) und am anderen Ende eine nahe der Mittelbohrung im inneren Rand-Bereich der genannten Seitenwand ausmündende zweite Öffnung (92) hat.

## Revendications

1. Turbomoteur à gaz à débit moyen, compact comprenant des moyens de compresseur (2) pour la compression d'air d'entrée (1), ces moyens de compresseur comprenant au moins deux étages, incorporant au moins un étage qui est constitué d'une partie de compresseur axial d'une unité de compresseur axial/turbine à compresseur axial formée d'une seule pièce (38) comprenant un disque de turbine supportant un rang d'aubes (42, 44) sous la forme de deux rangées concentriques d'aubes, dont la rangée intérieure (42) constitue la partie de compresseur axial et dont la rangée extérieure (44) constitue une partie de turbine à compresseur axial de l'unité de compresseur axial/turbine à compresseur axial formée d'une seule pièce, des moyens de combustion (64) pour la combustion de combustible en mélange avec l'air comprimé produit par les moyens de compresseur précités pour donner des gaz chauds, des moyens générateurs de puissance débitée (8, 78) agencés en aval des moyens de combustion précités et répondant activement à ces gaz chauds, des premiers moyens (54) pour diriger les gaz chauds des moyens de combustion (64) vers la partie de turbine à compresseur (44) de l'unité de compresseur axial/turbine à compresseur axial formée d'une seule pièce pour commander cette dernière et commander en même temps l'étage (34) ou les étages précédents des moyens de compresseur précités, des seconds moyens (60) pour diriger l'air comprimé qui est produit par l'étage (34) ou les étages précédentes des moyens de compresseur vers l'étage final de ceux-ci, avant le mélange de l'air comprimé avec du combustible, en refroidissant ainsi le rang d'aubes (42, 44) de l'unité de compresseur axial/turbine à compresseur axial formée d'une seule pièce, les premiers (54) et les seconds (60) moyens de direction étant construits et agencés tous deux pour guider respectivement les gaz chauds et l'air comprimé en circulation, à l'intérieur du moteur et dans la même direction, à travers l'unité de compresseur axial/turbine à compresseur axial formée d'une seule pièce (38), ainsi que des moyens d'échange de chaleur (68) agencés et adaptés pour transférer la chaleur des gaz chauds à l'air comprimé après que les gaz chauds aient traversé la partie de turbine à compresseur axial (44) et avant que l'air comprimé n'entre dans les moyens de combustion (64), caractérisé en ce que les étages de compresseur comprennent un étage de compresseur du type centrifuge (34) et les étages de compresseur sont tous montés sur un arbre commun (3, 28), l'étape final de ceux-ci étant constitué de la partie de compresseur axial (42) de l'unité de compresseur axial/turbine à compresseur axial formée d'une seule pièce (38), et en ce que les moyens générateurs de puissance débitée (78) comprennent une turbine génératrice de puissance à l'arbre et les moyens d'échange de chaleur (68) sont intercalés entre l'unité de compresseur axial/turbine à compresseur axial formée d'une seule pièce (38) et la turbine génératrice de puissance.

2. Turbomoteur à gaz suivant la revendication 1, caractérisé en ce que l'unité de compresseur axial/turbine à compresseur axial formée d'une seule pièce (38) est pourvue d'écrans d'admission partielle (43, 45, figure 11) dans la partie de turbine à compresseur axial et/ou dans la partie de compresseur axial.

3. Turbomoteur à gaz suivant la revendication 1, caractérisé en ce que les moyens échangeurs de chaleur (68) sont constitués par un échangeur de chaleur à contre-courant ayant une forme cylindrique comprenant une série de premiers et seconds conduits alternés, incurvés en spirale, de mise en contact thermique, chacun de ces premiers conduits comportant une ouverture (82) à une extrémité conduisant à une partie de trou central (84, figure 4) de l'échangeur de chaleur et une autre ouverture (86) à proximité de l'autre extrémité du premier conduit à l'endroit d'un bord périphérique extérieur d'une paroi latérale (88) de l'échangeur de chaleur, et chacun de ces seconds conduits comportant une ouverture (90) à une extrémité le long de la surface périphérique extérieure de l'échangeur de chaleur et une seconde ouverture (92) à l'endroit de la paroi latérale précitée à proximité de la partie de trou centrale susdite.

EP 0 173 774 B1

Fig.1.

Fig.2.

Fig.3.

Fig.4.

Fig.5.

Fig.6.

2

Fig.7.

Fig. 8.

EP 0 173 774 B1

Fig. 9

Fig. 10

EP 0 173 774 B1